Europäisches Patentamt

European Patent Office

Office européen des brevets

(11) Publication number: **0 330 872**
**A2**

## (12) EUROPEAN PATENT APPLICATION

(21) Application number: 89102102.4

(22) Date of filing: 08.02.89

(51) Int. Cl.4: **F23J 1/00** , **F23G 5/08** ,
**B09B 3/00**

(30) Priority: 02.03.88 US 162840

(43) Date of publication of application:
06.09.89 Bulletin 89/36

(84) Designated Contracting States:
**BE CH DE FR GB IT LI**

(71) Applicant: **WESTINGHOUSE ELECTRIC
CORPORATION
Westinghouse Building Gateway Center
Pittsburgh Pennsylvania 15222(US)**

(72) Inventor: **Lee, Suh Yong
1010 Harvard Road
Monroeville PA 15146(US)**
Inventor: **Levin, George Benjamin
287 Fieldbrook Drive
Pittsburgh, PA 15228(US)**

(74) Representative: **Stratmann, Ernst, Dr.-Ing.
Schadowplatz 9
D-4000 Düsseldorf 1(DE)**

(54) **Method for continuous agglomeration of heavy metals contained in incinerator ash.**

(57) Ashes (10) from municipal solid waste and toxic waste incinerators contain heavy metals harmful to the environment. This invention addresses a process in which the noncohesive ash (10) is agglomerated and/or encapsulated to substantially prevent dispersion of heavy metals to the environment. Ash (10) coming out of the incinerator is heated by means of an auxiliary burner or a plasma torch (14) to a temperature equal to or above its fusion or slagging temperature. In addition, low·melting additives or fusion temperature lowering additives (19) may be mixed into the ash (10). A large fraction of the ash (10) will melt and form glass-like agglomerates which substantially reduce the leachate of toxic heavy metals. Thus, the agglomerated ash (10) is safe to be transported and disposed in the landfill sites.

# METHOD FOR CONTINUOUS AGGLOMERATION OF HEAVY METALS CONTAINED IN INCINERATOR ASH

The present invention relates to methods for continuously agglomerating heavy metals such as lead, cadmium, mercury, chromium, silver, etc., contained in ash from municipal solid waste incinerators, thereby substantially reducing or preventing the leaching of such metals into the environment.

Recent reports indicate that U.S. cities and towns generate more than 410,000 tons of waste each day. Until recently, most of this municipal solid waste was disposed at landfill dumping sites. However, in more recent years, the number of available landfills has grown smaller as more and more such sites become filled or are closed for violating state and federal environmental laws and for contaminating groundwater supplies.

In an effort to curb the increased environmental pressures caused by municipal solid waste, recent efforts have focused on resource recovery, namely the incineration of such wastes and recovery of the heat produced thereby. This recovered heat is used to produce steam for heating buildings, running air conditioners, or powering the turbine of an electrical generator.

A serious problem associated with municipal solid waste incinerators is the production of ash. Ash from municipal solid waste incinerators often contain heavy metals, some of which may be harmful to the environment. Dispersion of such materials to the environment is regulated by the Environmental Protection Agency (EPA) and corresponding state and local agencies.

The prior art has recognized methods of encapsulating solid waste in molten glass in order to prevent leaching out of undesirable components contained in the waste. See, for example, U.S. Patent No. 4,299,611. However, such methods require expensive and complex equipment, and require glass to be melted prior to addition of the solid waste. Accordingly, it is desirable in the art of municipal solid waste disposal to more efficiently and continuously treat solid waste in order to prevent the leaching of heavy metals from ash produced by municipal solid waste incinerators.

This invention addresses a process in which the noncohesive ash from municipal solid waste incinerators is heated to its fusion state and then agglomerated into aggregate which is nonpermeable to leachate such as water or acidic water, sealing in permanently any toxic heavy metals it contains. The treating step is effected as the ash leaves the combustor, minimizing the modification required to existing incinerators. The agglomerated ash can be easily transported and disposed with substantially reduced harm to the environment.

The invention will become more readily apparent from the following description of a preferred embodiment thereof shown, by way of example only, in the accompanying drawing, wherein:

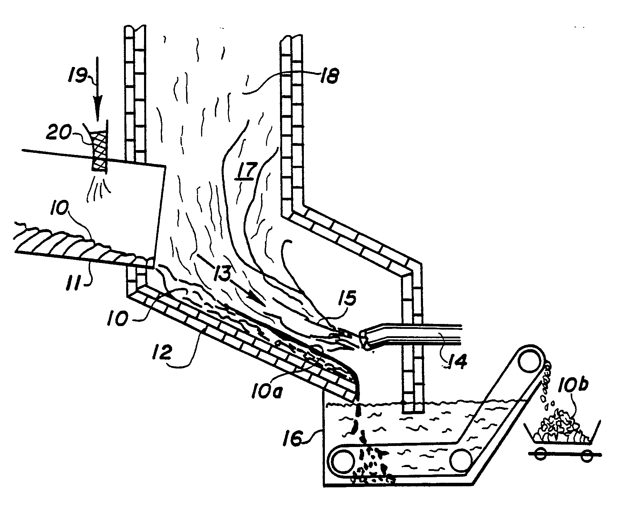

Figure 1 is a schematic representation illustrating a preferred method of practicing the present invention.

Ash from a municipal solid waste incinerator typically contains $SiO_2$, $Al_2O_3$, $Fe_2O_3$, and $CaO$ as major constituents and other materials including toxic metals as trace. Normally, the ash is exposed to a temperature below its fusion temperature, and it remains dry and friable.

The present invention addresses a method whereby loose ash is agglomerated and/or encapsulated. The ash is preferably heated directly to a temperature above its fusion temperature so that some of the ash constituents will melt and form aggregates. When the ash is heated to a temperature equal to or above its fusion temperature, a large fraction of the ash melts forming glass or glass-like material which substantially reduces the leachate of the toxic metals.

Although not required by the invention, additives may also be mixed into the ash. The additive may be either a fusion temperature lowering type or a material with low temperature melting properties. When mixed with the ash, the additives will lower the fusion temperature of the mixture by forming an eutectic mixture. Low temperature melting additives will simply melt and aggregate and/or encapsulate the ash. These two methods of encapsulating and/or agglomerating can be applied singularly or jointly.

The exact fusion temperature of the ash depends on composition of the major constituents as well as the trace elements it contains. For most of the ash from an incinerator, the fusion temperature ranges from 1150°C to 1250°C. When additives are used, the fusion temperature can be reduced below 1100°C.

As shown in Figure 1, the invention concerns a process in which dry ash 10 from a municipal solid waste incinerator passes through a combustor 11 to an inclined refractory-lined surface 12. The angle of the inclined surface 12 is sufficiently steep to permit the ash 10 to run down the surface 12 in the direction indicated by the arrow 13 under the force of gravity and form a thin layer. An auxiliary high temperature gas generating device 14, which may be a plasma torch or gas burner is directed towards the ash 10 as the thin layer of ash slides down the inclined surface 12. As the thin layer of ash 10 slides down the inclined surface 12 it passes through a heated area 15, and is heated throughout the layer by the auxiliary high temperature gas generating device 14 and melts.

The molten ash 10a continues to run down the inclined surface 12. Once the molten ash 10a reaches the end of the inclined surface 12, the ash 10a drops into an agglomerating means 16, which may be a wet deslagger. The agglomerating means 16 causes the molten ash 10a to be formed into glass agglomerates 10b which substantially reduce, if not eliminate, the leaching of toxic heavy metals therefrom. Thus, the agglomerated ash is safe to be transported and disposed of in land fill sites.

Heat 17 given off by the plasma torch or the auxiliary high temperature gas generating device 14 may be used to increase the temperature in the afterburner chamber 18 and eventually is recovered in the boiler section of the incinerator.

Because the thin layer of ash 10 is heated throughout the thin layer by the auxiliary high temperature gas generating device 14, as the thin layer of ash runs down the inclined surface 12, there is no need to first melt glass, incorporate the ash therein, and convey the mixture with complex equipment practiced in the prior art.

Another method for turning the dry ash into encapsulate and/or agglomerated aggregates is also shown in Figure 1. Additives 19 such as glass bottles or sand are added to the combustor 11 prior to the point where the ash 10 is introduced to the inclined surface 12, by means of an additive inlet port 20 located at the exit of the combustor 11. Ash and additives mix and move downward on the refractory lined, inclined surface 12. The ash or ash-additive mixture 10 is heated above the fusion temperature by the auxiliary high temperature gas generating device 14, preferably a plasma torch, which generates very high temperature gas, or a conventional torch burner using natural gas or fuel oil. When additives are used, the fusion temperature may be dropped to below 1100°C. The molten ash/additive mixture 10 flows down the inclined surface 12 and then into an agglomerating means 16 which may be a water filled quench tank or wet deslagger. The molten ash/additive when plunged into the agglomerating means 16 forms aggregate 10b which is collected according to means well known to those skilled in the art.

The carbon content of the ash from the incinerator ranges from 5% to 10% by weight. The unburned carbon contains a considerable amount of heat which can be utilized by further burning the carbon with added air. This heat can be used to supplement the heat from the plasma torch or burner to provide heat for melting the ash.

The present invention permits the continuous treatment of ash as said ash exits the combustor, which represents an advantage over prior art treatment methods using batch processing techniques. Also, the invention may be practiced with only minimal modification of existing incinerators, and with minimal additional equipment.

Although the invention has been described in detail in the foregoing for the purpose of illustration, it is to be understood that such detail is solely for that purpose and that variations can be made therein by those skilled in the art without departing from the spirit and scope of the invention as it is described by the claims.

## Claims

1. A method for continuously agglomerating heavy metals contained in ash (10) produced by a municipal solid waste combustor (11) to prevent dispersion of heavy metals to the environment, characterized by the steps of dropping said ash (10) from said combustor (11) on an inclined refractory-lined surface (12) so inclined that said ash (10) runs down said inclined surface (12) in a thin layer, heating said thin layer of ash (10) throughout the thickness of said layer to approximately its fusion temperature with an auxiliary high temperature gas generating device (14) until the ash is molten runs down said inclined surface (12); dropping said molten ash (10a) into an agglomerater (16) and agglomerating said molten ash into glass-like agglomerates (10b).

2. The method of Claim 1 characterized in that heating said thin layer of ash with an auxiliary high temperature gas generating device (14) comprises heating said thin layer of ash with a plasma torch.

3. The method of Claim 1 characterized in that dropping said molten ash into an agglomerater (16) comprises dropping said molten ash into a wet deslagger (16).

4. The method of Claim 1 characterized by adding additives (19) to said ash (10) in said combustor prior to dropping said ash (10) on said inclined surface (12), and mixing the additives and ash to lower the fusion temperature of the ash (10).

5. The method of Claim 4 characterized in that said additives (19) are selected from the group consisting of said, glass, limestone and dolomite.

6. The method of Claim 1 characterized in that heating said ash (10) comprises heating said ash to a temperature generally in the range of 1150°C - 1250°C.

7. The method of Claim 1 characterized by adding air to said ash (10) to burn unburned carbon in said ash to provide additional heat to assist the auxiliary high temperature gas generating device (14) in melting said ash.